Europäisches Patentamt

(19) **European Patent Office**

**Office européen des brevets**

(11) Publication number: **0 147 467**

**A1**

(12) **EUROPEAN PATENT APPLICATION**

published in accordance with Art. 158(3) EPC

(21) Application number: **84901405.5**

(22) Date of filing: **30.03.84**

Data of the international application taken as a basis:

(86) International application number:
**PCT/JP84/00155**

(87) International publication number:
**WO84/03961 (11.10.84 84/24)**

(51) Int. Cl.⁴: **G 05 B 19/405**
**G 06 F 3/02**

(30) Priority: **01.04.83 JP 56943/83**

(43) Date of publication of application:
**10.07.85 Bulletin 85/28**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **ISOBE, Shinichi**
**Hinodai-Haitsu 516 1-1-1, Hinodai Hino-shi**
**Tokyo 191(JP)**

(72) Inventor: **SAWADA, Kazuo**
**Ikeda-Sou 5-17-11, Tamadaira Hino-shi**
**Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **MACHINE-OPERATING PANEL FOR NUMERICAL CONTROL.**

(57) A machine-operating panel for numerical control enables the input of necessary operating information by a selection of one of a plurality of items of displayed operating information. A processor (MPU) is actuated by operating an operating information set keys (OIS) on a machine-operating panel (MOP) so that an operating information image stored in an image memory (IMM) is displayed on a display device (CRT). A cursor is positioned at various selection columns and setting items on the display screen by operating cursor keys (C1 to C4). When an input key (IPT) is pressed, operating information is stored in an operating information memory (OIM) by an operational control circuit (OPCN).

EP 0 147 467 A1

./...

Fig. 6

## TITLE OF THE INVENTION

MACHINE OPERATOR'S PANEL FOR NUMERICAL CONTROL

## BACKGROUND OF THE INVENTION

The present invention relates to a machine operator's panel for numerical control, which is used to select or set operation information for numerically controlling a machine tool, and, more particularly, to a machine operator's panel for numerical control, which is enabled to select or set a desired piece at will in a display from the pieces of operation information displayed in said display.

A numerical control system for numerically controlling a machine tool conducts a predetermined numerical control processing on the basis of numerical control program data or the pieces of operation information set in a machine operator's panel.

These pieces of operation information include:
(1) Mode Information for designating a run mode such as an edition, a memory run, a tape run, an MDI run, a jog run or a handle feed run;

(2) Single Block - on/off;

(3) Dry Run - on/off;

(4) Block Delete - on/off;

(5) Machine Lock - on/off;

(6) Feed Hold - on/off;

(7) Zero Return - on/off;

(8) Jog Feed Direction;

(9) Jog Feed Speed and Override;

- 2 -

(10) Handle Axis Selection; and

(11) Handle Feed Magnification.

And, the machine operator's panel of the prior art is equipped a number of switches or buttons for setting those pieces of operation information.

Specifically, if the switches or buttons according to the operation information are mounted in the machine operator's panel so that the number of pieces of operation information to be set is increased, the switches or buttons for the increased information are added to invite not only a defect that the operation itself becomes difficult but also a defect that the system is large-sized to raise the production cost. If the operation information is different for each machine applied, moreover, the machine design has to be conducted in conformity with the difference, and an expensive decorative laminated sheet conforming to the number and shapes of the aforementioned switches or buttons has to be prepared thereby to invite a defect that the production cost is further raised.

### SUMMARY OF THE INVENTION

It is, therefore, an object of the present invention to provide a machine operator's panel for numerical control, which is enabled to select or set a desired piece of operation information at will in a single operator's panel independently of the number of the pieces of operation information or the kind of the machine to be numerically controlled.

The machine operator's panel according to the present invention is constructed of a memory for storing operation information for a machine control, a display for displaying the operation information stored in the memory, and selecting means for selecting an arbitrary piece from the operation information displaced. In the machine operator's panel for numerical control of the present invention, more specifically, all the pieces of operation information necessary for the numerical control in the operator's panel are stored in advance in the memory. Either a portion of the operation information stored is displayed sequentially or all of the same is displayed as an image in the display so that an item or items of the operation information displayed are selected in the image by the selecting means to set the operation information. On the basis of the operation information thus set, an arithmetic control unit controls the numerical control machine in accordance with a predetermined control program. As a result, since the operation information can be set in the frame of the display, the operator's panel need not be equipped with the switches or buttons for setting the operation information so that the setting of the operation information can be easily conducted, no matter what the function or kind of the machine to be numerically controlled might be, merely by changing the display frame of the operation information according to that particular function or kind. Thus, the design of the operator's panel can be simplified so that it can easily cope with increase in the quantity of the operation information or change in the specification.

## BRIEF DESCRIPTION OF THE DRAWINGS

Fig. 1 is a diagram explaining one embodiment of the present invention;

Fig. 2 is a diagram explaining another embodiment of the present invention;

Fig. 3 is a view showing the construction of cursor keys for one embodiment of the present invention;

Fig. 4 is a diagram showing a correspondence between the keys and axes for the present invention; and

Fig. 5 is a block diagram showing one embodiment of the present invention.

## DESCRIPTION OF THE PREFERRED EMBODIMENTS

The present invention will be described in more detail in the following with reference to the accompanying drawings.

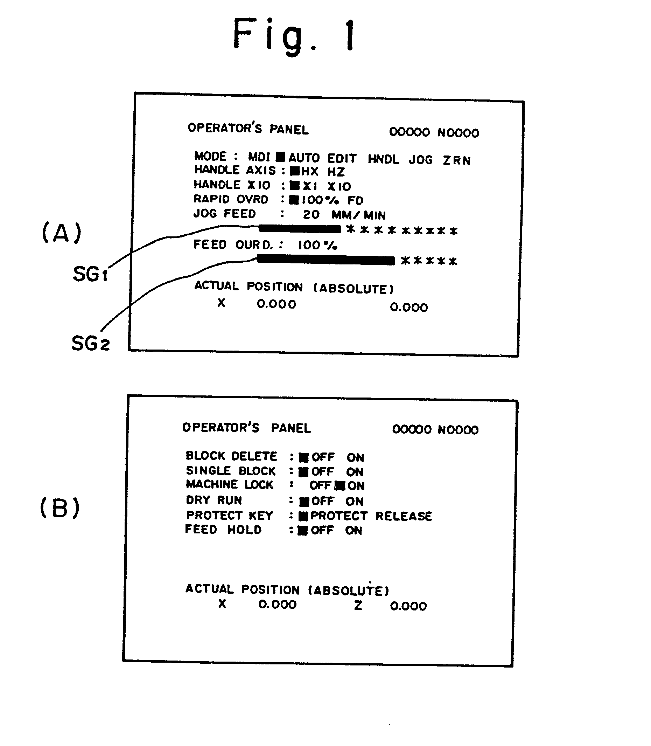

Fig. 1 is a diagram showing an example of the display of operation information of a display for explaining one embodiment of the present invention. In this example, the operation information is displayed by letters so that it is set in view of the display by means of either a cursor moving key placed in the machine operator's panel or a light pen.

In Fig. 1(A), letters "MODE" indicate a mode information selecting column, in which one of run modes such as MDI run, an automatic run (AUTO: a tape or memory run), an edition run (EDIT), a handle run (HDI), a jog feed run (JOG) or a zero return run (ZRN) can be selected. In order to select the automatic run (AUTO), for example, both a horizontal key and a vertical key on the machine operator's panel are operated to position a cursor (□) in front of the AUTO, and then the automatic run mode is selected. On the other hand: letters "HANDLE AXIS" indicate a handle feed axis selecting column; "HANDLE *10" a handle feed magnification selecting column; "RAPID OVRD" a rapid override setting column; and "FEED OVRD" a feed speed. Incidentally, the selection of the operation information is conducted like the case of the mode selection. Specifically, the desired operation information is selected by positioning the cursor in front of an item of a selection column displayed. On the other hand, setting of the quantity of the operation in each setting column is conducted by operating the horizontal key to extend a bar SG1 or SG2 to the right or left. If the horizontal key is operated, more specifically, the bar extends or contracts during the operation so that the quantity is set and displayed in accordance with the length of the bar. In Fig. 1(A), the jog feed speed is set at 20 mm/min, and the feed override is set at 100 %.

In Fig. 1(B), on the other hand: letters "BLOCK DELETE" indicate a block delete - on/off column; "SINGLE BLOCK" a single block - on/off column; "MACHINE LOCK" a machine lock - on/off column; "DRY RUN" a dry run - on/off column; "PROTECT KEY" a column for selecting whether the edition of the stored content of the memory is prohibited or not; and "FEED HOLD" a feed hold - on/off column. The selection of the operation information (on/off) is conducted by positioning the cursor in front of the "on" or "off". In the example of Fig. 1(B), the following items are set: the block delete - off, the single block - off; the machine lock - off; the protect key - protect; and the feed hold - off.

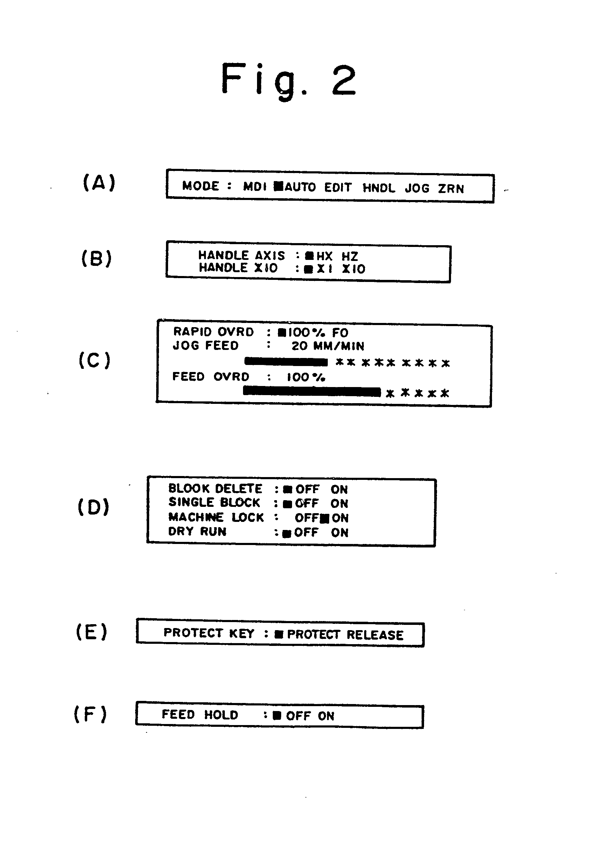

Incidentally, the foregoing is the case in which all the operation information is inputted by using the display frame. As shown in Fig. 2(A) to (F), however, the operation information may be divided into groups 1 to 7: a mode selection group (Fig. 2(A)); a handle feed group (Fig. 2(B)); a feed-speed related group (Fig. 2(C)); an automatic-run related group (Fig. 2(D)); a program protect group (Fig. 2(E)); a feed hold group (Fig. 2(F)); and a JOG-feed related group (although not shown), of which only a few groups may be inputted from the display frame.

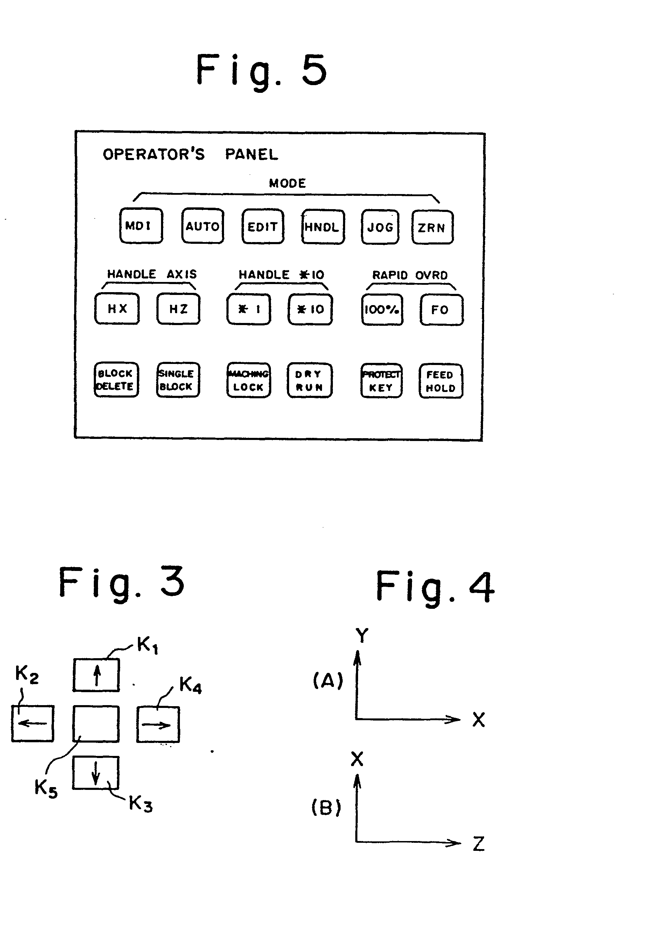

Fig. 3 is a diagram showing an array of manual feed keys which are arranged on the operator's panel. The machine tool or robot can be manually fed in a direction of a predetermined axis by operating keys K1 to K4, and a rapid feed can be effected by simultaneously operating a key K5. Here, the machine tool has either an X axis and a Y axis or an X axis and a Z axis, as the case may be. For example, a milling machine has its coordinate determined, as shown in Fig. 4(A), and a lathe has its coordinate determined, as shown in Fig. 4(B). In dependence upon the machine tool used, therefore, each key may be used for the +X direction or the +Y direction. With this in mind, the correspondences between the respective keys and axes can be inputted as the operation information in the present invention.

Fig. 5 is a diagram explaining another embodiment of the present invention, which is different from the case of Fig. 1 in that the operation information is displayed in the form of keys in the display. In the frame of the display, moreover, transparent conductive films having the forms of the keys displayed are arranged as touch keys for the respective pieces of the operation information.

As a result, the operation information can be set by touching the corresponding display keys in the frame of Fig. 5 with the finger of the operator. Incidentally, the operation information displayed has the same meaning as that of Fig. 1.

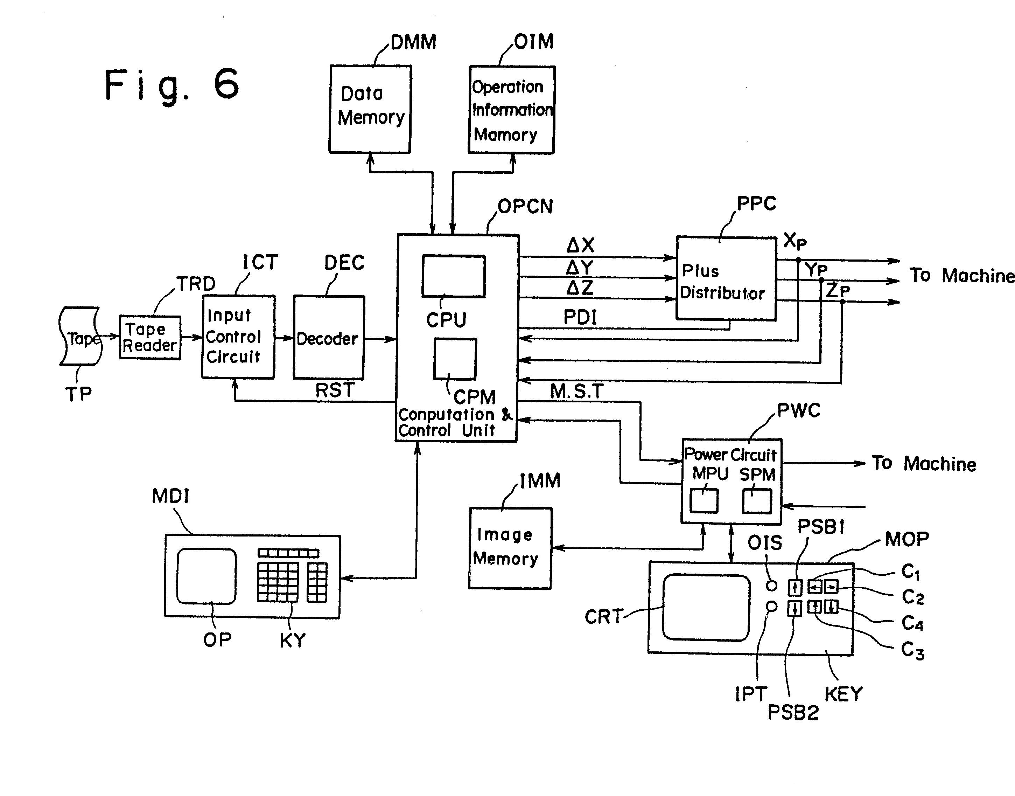

Fig. 6 is a block diagram showing one embodiment according to the present invention. In Fig. 6, letters TP indicate an NC tape which is punched to have a pattern corresponding to an NC program containing a number of numerical control data (i.e., NC data). Letters TRD indicate a tape reader, and letters ICT indicate an input control circuit for controlling the tape reader TRD to sequentially read out the NC data from the NC tape TP and to input them to a decoder at a later stage. Letters DEC indicate the decoder for decoding the NC data read out to output them to a computation and control unit, if said NC data are position instructions (Xe, Ye, Ze), a G function command or the like, or to the machine through a power circuit at a later stage, if the same are M, S and T function commands. Letters OPCN indicate a computation control circuit which is composed of a central processing unit CPU and a control program memory CPM and which is operative to execute a predetermined numerical control processing on the basis of either the numerical control program data inputted from the NC tape TP or the operation information.

Letters PPC indicate a pulse distributor for outputting distributed pulses Xp, Yp and Zp to the machine in response to distribution instructions $\Delta X$, $\Delta Y$ and $\Delta Z$ from the computation control circuit OPCN. Letters PWC indicate the power circuit which is constructed of a programmable controller to sequentially control the machine in accordance with a function command inputted and to execute an operation information input processing to be described later and which is composed of a processor MPU and a memory SPM for storing a sequence program. Letters MOP indicate the machine operator's panel which is equipped with a display CRT, an operation information setting key OIS, an input key IPT, page switching buttons PSB1 and PSB2, and cursor keys C1 to C4. Letters IMM indicate an image memory for storing the operation information to be displayed in the aforementioned display CRT. Letters MDI indicate a manual data input unit which is equipped with a display DP and a variety of keys KY for inputting the NC instruction data to the computation control circuit OPCN by means of the various keys and to display in the display DP the content of the data having the state of the computation control circuit OPCN instructed by the keys, for example.

Letters OIM indicate an RAM (i.e., an operation information storing memory) of a battery backup for storing the operation information, which is set by the machine operator's panel, to store the operation information which is inputted by means of both the display CRT of the machine operator's panel MOP and the keys KY. Letters CMM indicate a data memory for storing the numerical control processing results or the like.

Next, the operations of the construction of Fig. 6 will be described in the following.

Now, when the operation information is to be inputted from the machine operator's panel, the operation information setting key OIS on the machine operator's panel MOP is first operated to demand the processor MPU of the power circuit PWC for the operation information input processing. Then, the page switching button PSB1 or PSB2 (e.g., the former for page increment and the latter for page decrement) is depressed. If this page switching button is continuously depressed, the processor MPU sequentially causes the CRT to display the image which is stored in the image memory IMM. Here, since this image memory IMM is stored with the operation information over a plurality of pages, the page switching button PSB1 or PSB2 is released when a desired operation information image is displayed, and then the cursor keys C1 to C4 are operated. As has been described hereinbefore, the cursors are positioned in predetermined items of the respective selecting columns and setting columns, and the input key IPT is depressed. Then, pieces of the operation information are consecutively selected or set and transferred through the power circuit PWC to the computation control circuit OPCN until they are stored in the operation information memory OIM, thus ending the inputting actions of the operation information.

After this, the computation control circuit OPCN executes the numeral control program in accordance with the operation information, which is stored in the operation information memory OIM, to numerically control the machine through the pulse distributor PPC and the power circuit PWC.

Thus, in the system of the present embodiment, the operation information stored in the operation information memory OIM is displayed in the frame of the display, and a necessary piece of the operation information is selected or set from that displayed by operating the cursor keys or the light pen. Then, the numerical program can be executed by the computation control circuit in response to the operation information selected or set. As a result, the switches or buttons used for selecting or setting the operation information in the prior art can be omitted from the operator's panel so that the present invention can contribute to simplification of the construction and to reduction in the production cost.

According to the system of the present embodiment, moreover, the operation information can be displayed and changed in the frame of the display in accordance with the function and kind of the machine to be numerically controlled. As a result, it is possible to select and set all kinds of operation information. Moreover, it is unnecessary to manufacture an expensive decorative laminated sheet in accordance with the kind of the machine, as is different from the prior art, and to prepare switches matching the decorative laminated sheet. Moreover, the layout and meanings of the switches can be changed without difficulty to afford an effect that the present invention can easily cope with the change in the specification and the increase in the information.

Although the present invention has been described above in connection with one embodiment thereof, incidentally, there can be made within the gist of the present invention a variety of modifications, which should not be excluded from the scope of the present invention.

As has been described hereinbefore, in the machine operator's panel for numerical control of the present invention, a number of pieces of operation information according to the functions of various numeral control machines are stored in the memory, and this operation information is displayed in the display so that a suitable piece of information can be selected or set from the operation information displayed. As a result, an arbitrary piece of operation information can be selected or set in a single machine operator's panel without any necessity for designing or manufacturing the machine operator's panels one by one in conformity with the aforementioned functions or the like. Thus, the user of the numeral control system is allowed to numerically control the machines over a wide field merely by preparing the machine operator's panel of common specifications. Especially the user aiming at manufacturing multiple kinds but a small number of works can be remarkably released from an economic burden.

0147467

- 13 -

WHAT WE CLAIM IS:

1.    A machine operator's panel for numerical control
to be used for selecting or setting operation
information for numerically controlling a machine,
comprising: a memory stored with the operation
information for a numerical control machine; a display
for displaying the operation information stored in said
memory; and selecting means for selecting an arbitrary
piece of the operation information displayed in said
display so that said numerical control machine can be
controlled in accordance with a predetermined program
on the basis of the operation information selected.

# Fig. 1

(A)

```
OPERATOR'S PANEL              OOOOO NOOOO

  MODE : MDI ■AUTO EDIT HNDL JOG ZRN
  HANDLE AXIS : ■HX HZ
  HANDLE X10  : ■X1 X10
  RAPID OVRD  : ■100% FD
  JOG FEED    :  20 MM/MIN
                        ██████████ ********
  FEED OURD. :  100%
                        █████████ *****

  ACTUAL POSITION (ABSOLUTE)
     X    0.000              0.000
```

SG1

SG2

(B)

```
OPERATOR'S PANEL              OOOOO NOOOO

  BLOCK DELETE  : ■OFF  ON
  SINGLE BLOCK  : ■OFF  ON
  MACHINE LOCK  :   OFF ■ON
  DRY RUN       : ■OFF  ON
  PROTECT KEY   : ■PROTECT RELEASE
  FEED HOLD     : ■OFF  ON



  ACTUAL POSITION (ABSOLUTE)
     X    0.000         Z   0.000
```

2

# Fig. 2

(A)
```
MODE : MDI ■AUTO EDIT HNDL JOG ZRN
```

(B)
```
HANDLE AXIS : ■HX  HZ
HANDLE XIO  : ■X I  XIO
```

(C)
```
RAPID OVRD : ■100% FO
JOG FEED   :   20 MM/MIN
           ■■■■■■■■ ✕✕ ✕✕✕ ✕✕✕✕
FEED OVRD  :   100%
           ■■■■■■■■■■■■■✕ ✕✕✕✕
```

(D)
```
BLOOK DELETE  : ■OFF  ON
SINGLE BLOCK  : ■OFF  ON
MACHINE LOCK  :   OFF■ON
DRY RUN       : ■OFF  ON
```

(E)
```
PROTECT KEY : ■PROTECT  RELEASE
```

(F)
```
FEED HOLD   : ■OFF ON
```

3

# Fig. 5

OPERATOR'S PANEL

MODE

| MDI | AUTO | EDIT | HNDL | JOG | ZRN |

HANDLE AXIS | HANDLE ✳10 | RAPID OVRD

| HX | HZ | ✳1 | ✳10 | 100% | FO |

| BLOCK DELETE | SINGLE BLOCK | MACHING LOCK | DRY RUN | PROTECT KEY | FEED HOLD |

# Fig. 3

# Fig. 4

(A)

(B)

# Fig. 6

International Application No. PCT/JP84/00155

## I. CLASSIFICATION OF SUBJECT MATTER (if several classification symbols apply, indicate all) ³

According to International Patent Classification (IPC) or to both National Classification and IPC

Int. Cl³    G05B 19/405, G06F 3/02

## II. FIELDS SEARCHED

| Minimum Documentation Searched ⁴ | |
|---|---|
| Classification System | Classification Symbols |
| IPC | G05B 19/403, 19/405, G06F 3/02 |

| Documentation Searched other than Minimum Documentation to the Extent that such Documents are Included in the Fields Searched ⁵ | |
|---|---|
| Jitsuyo Shinan Koho | 1926–1984 |
| Kokai Jitsuyo Shinan Koho | 1971–1984 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| Y | JP, A, 57-169813 (Mitsubishi Electric Corp.), 19 October 1982 (19. 10. 82) & WO, A, 8213704 & EP, A1, 76328 | |
| Y | JP, A, 56-88527 (Yokogawa Electric Works, Ltd.), 18 July 1981 (18. 07. 81) | |
| Y | JP, A, 49-23539 (Hitachi, Ltd.), 2 March 1974 (02. 03. 74) | |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| May 31, 1984  (31. 05. 84) | June 11, 1984  (11. 06. 84) |
| International Searching Authority ¹ | Signature of Authorized Officer ²⁰ |
| Japanese Patent Office | |

Form PCT/ISA/210 (second sheet) (October 1981)